# EUROPEAN PATENT APPLICATION

(11) **EP 4 140 692 A1**
(43) Date of publication of application: **01.03.2023**
(21) Application number: 21193846.9
(22) Date of filing: 30.08.2021
(51) Int. Cl.: B29C 49/64, B29C 49/42

(54) **SYSTEM FOR COOLING CONTAINERS ADAPTED TO BE FILLED WITH A POURABLE PRODUCT**

(71) Applicant: Sidel Participations, 76930 Octeville-sur-Mer (FR)
(72) Inventor: QUAGLIARELLA, Pierluigi, 43126 Parma (IT); MAMELI, Alessandro, 43126 Parma (IT)
(74) Representative: Sidel Group

(57) **Abstract**

There is described a cooling system (6, 6') for cooling containers (2) adapted to be filled with a pourable product, the cooling system (6, 6') comprising: a flow generator (7) for generating a cooling gas flow (F); a distribution duct (8) for receiving the cooling gas flow (F) and for directing the cooling gas towards the containers (2); a feeding duct (10) fluidly interposed between the flow generator (7) and the distribution duct (8) to fluidly connect them to one another for feeding the cooling gas flow (F) into the distribution duct (8); and a cooling device (11, 11') arranged downstream of the flow generator (7) configured to thermally interact with the cooling gas flow (F) for the cooling thereof; wherein the distribution duct (8) comprises an external wall (13) having at least one outlet opening (14) for feeding the cooling gas towards the containers (2).

## Description

### TECHNICAL FIELD

The present invention relates to a cooling system for cooling containers, in particular plastic containers obtained from plastic preforms, adapted to be filled with a pourable product, preferably a pourable food product.

### BACKGROUND ART

Apparatuses for packaging a pourable product, preferably a pourable food product such as water, beer, wine, juice, milk, soft drinks or the like, are known.

Such packaging apparatuses comprise a number of units, each configured to carry out a specific operation during the packaging process.

In particular, in case the containers are made of plastic material, e.g. plastic bottles, a typical packaging apparatus comprises:
- a blower unit for producing the containers starting from known preforms which are made of plastic material;
- a filling unit (filler) for filling each container with a predetermined amount of pourable product;
- a capping unit (capper) for capping each filled container; and
- a labelling unit (labeler) for labelling the filled and capped containers.

According to a known alternative configuration, the labelling operation can be carried out before filling and capping the containers.

In such a case, it is necessary to carry out a pressurization step on the containers, so as to counteract the forces applied thereon during the labelling operation, thereby avoiding undesired deformations.

In the case the product is a carbonated product, such as sparkling beverage, a pressurization step is also needed for the purpose of filling the containers.

In any of such cases, the pressurization step is carried out onto the containers output from the blower unit and, due to the high production speed, just moments after their formation. In this condition, the plastic material constituting the freshly-formed containers is still at a relatively high temperature.

Hence, the pressurization step can cause undesired deformation of the containers, which can lead to unwanted final shapes or even ruptures of the same.

To avoid or at least reduce the aforementioned problem, it is known to provide the packaging apparatuses with a cooling system arranged along the packaging line, and particularly between the forming of the containers and the pressurization step. The cooling is aimed to avoid or reduce the undesired deformations (or ruptures) of the containers.

Typically, a known cooling system comprises:
- a source of cooling fluid, which is typically either compressed air or water;
- a cooling device for cooling the cooling fluid;
- a distributor for receiving the cooling fluid previously cooled by the cooling device and for feeding it to the containers to be cooled, which in the meantime are being conveyed along a cooling path of the packaging apparatus by a conveyor.

The conveyor is typically defined by one or more star wheels operatively interposed between the blower unit and the unit (filler or labeler) immediately downstream of the latter.

Although being structurally and functionally valid, the Applicant has observed that the cooling systems of the above-mentioned type suffer from certain drawbacks.

In particular, in case compressed air is used as a cooling fluid, it is necessary to provide the star wheel(s) with rotary joints for leading the compressed air towards the containers being conveyed. The costs for maintenance connected to the rotary joints can be high.

Moreover, the known systems for producing cooled compressed air are mechanically complex and cumbersome, as they currently require the separation of two air flows, one cold, the other hot, leading to high inefficiency of the process.

In case cold water is used as a cooling fluid, the hygiene conditions of the cooling system and of the packaging apparatus may be affected. Furthermore, in case the labelling operation is to be carried out directly downstream of the forming operation, the containers may still be wet, thereby affecting the application of the labels thereon. Moreover, the water consumption can be high, which leads to high operative costs.

### DISCLOSURE OF INVENTION

It is therefore an object of the present invention to provide a cooling system which is designed to overcome at least one of the above-mentioned drawbacks in a straightforward and low-cost manner.

This object is achieved by a cooling system as claimed in claim 1.

### BRIEF DESCRIPTION OF THE DRAWINGS

Non-limiting embodiments of the present invention will be described by way of example with reference to the accompanying drawings, in which:
Figure 1 is a schematic top view, with parts removed for clarity, of a packaging apparatus comprising a cooling apparatus having a cooling system according to the present invention;
Figures 2A, 2B and 2C are larger-scale perspective views, with parts removed for clarity, of the cooling system according to the present invention;
Figures 3 and 4 are larger-scale perspective views, with parts removed for clarity, of the cooling system according to an alternative embodiment of the present invention; and
Figure 5 is a larger-scale lateral view of the cooling system of Figure 1 during a specific operative condition.

### BEST MODE FOR CARRYING OUT THE INVENTION

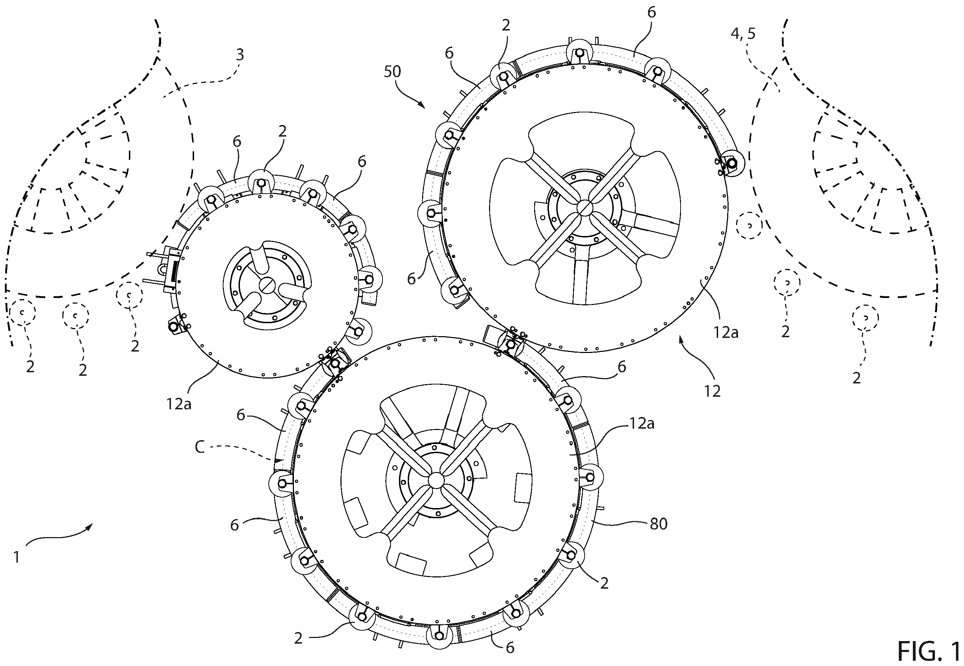

With reference to Figure 1, number 1 indicates as a whole an apparatus for packaging a pourable product, preferably a pourable food product such as water, beer, wine, juice, milk, soft drinks or the like.

In particular, apparatus 1 is configured for packaging the pourable product by means of a plurality of containers 2, for example plastic bottles.

Apparatus 1 comprises a number of units each configured to carry out a specific operation during the packaging process.

In detail, apparatus 1 comprises:
- a blower unit 3 (only schematically shown in Figure 1) for forming the containers 2 starting from preforms, the preforms being made of plastic material;
- a filling unit or filler 4 (only schematically shown in Figure 1), for filling the containers 2 with a predetermined amount of pourable product; and
- a labelling unit or labeler 5 (only schematically shown in Figure 1), for labelling the containers 2.

Conveniently, apparatus 1 also comprises a capping unit or capper (not shown), for capping each filled container 2.

In one embodiment, filling unit 4 is arranged operatively downstream of blower unit 3 and upstream of labelling unit 5.

Alternatively, labelling unit 5 is arranged operatively downstream of blower unit 3 and upstream of filling unit 4.

In light of the above and for the sake of simplicity, the filling unit 4 and the labelling unit 5 will be indicated and illustrated hereinafter as a "downstream unit 4, 5".

It is known to carry out a pressurization step of the containers 2 downstream the blowing unit 3 and upstream of the downstream unit 4, 5, e.g.:
- to counteract the forces applied thereon during the labelling operation thereby avoiding undesired deformations; or
- for the purpose of filling the containers with a carbonated pourable product, such as a sparkling beverage.

Regardless of the case, the containers 2 have to be cooled before the pressurization step is carried out, so as to avoid undesired deformations or ruptures, as explained in the introductory portion of the present description.

To this end, apparatus 1 comprises a cooling apparatus 50 including at least one cooling system 6 for cooling containers 2 and conveniently arranged along the packaging line downstream of the blower unit 3 and upstream of the downstream unit 4, 5.

Furthermore, the cooling apparatus 50 comprises a conveyor 12 for advancing the containers 2 to be cooled along a cooling path C.

Conveniently, conveyor 12 comprises at least one star wheel 12a rotatable about a central axis, preferably vertical. The star wheel 12a is configured for peripherally receiving the containers 2 at respective peripheral seats thereof, and for carrying the received containers 2 along cooling path C.

In the example shown, conveyor 12 comprises three star wheels 12a, arranged one after the other and operatively connected to one another, thereby defining a curved cooling path C having three center of curvatures.

In the following description, reference will be made to a single cooling system 6.

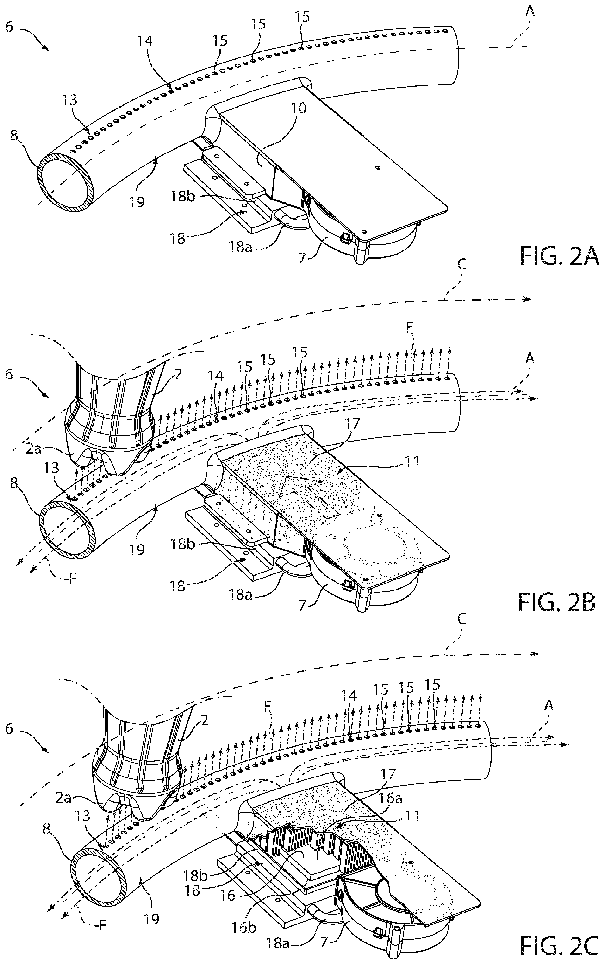

With reference to Figures 2A, 2B and 2C, cooling system 6 comprises:
- at least one flow generator 7 for generating a cooling gas flow F;
- a distribution duct 8 for receiving the cooling gas flow F and for directing the cooling gas towards the containers 2 to be cooled;
- a feeding duct 10, which is fluidly interposed between the flow generator 7 and the distribution duct 8 for fluidly connect them to one another, to feed the cooling gas flow F into the distribution duct 8; and
- a cooling device 11 arranged downstream of the flow generator 7, the cooling device 11 being configured for thermally interacting with the cooling gas flow F, to cool the latter.

According to this preferred embodiment, the cooling gas is air, preferably sterile and/or aseptic air.

Distribution duct 8 comprises an external wall 13.

More specifically, distribution duct 8 has a longitudinal axis A and external wall 13 extends longitudinally along axis A.

Expediently, distribution duct 8 is positioned relative to the conveyor 12 so that external wall 13 faces cooling path C, in particular part of cooling path C, as visible in Figure 2b and 2c.

In detail, distribution duct 8 is positioned relative to the conveyor so that axis A extends along, or follows geometrically, part of cooling path C.

In greater detail, axis A is curved with the center of curvature corresponding to the central axis of star wheel 12a (of one of star wheels 12a).

Hence, both axis A and the respective part of cooling path C followed by axis A have the same center of curvature.

In the example shown, cooling system 6, and therefore cooling apparatus 50, is configured for cooling a bottom portion 2a of the containers 2 conveyed along cooling path C.

In fact, the bottom part 2a is the thickest part of the container 2 and, hence, the part thereof which cools off more slowly, thereby needing more to be cooled off.

Accordingly, distribution duct 8 is positioned relative to the conveyor 12 so that external wall 13 faces cooling path C for facing the bottom portion 2a of the containers 2 conveyed along cooling path C.

In practice, external wall 13 defines an upper wall of distribution duct 8 and is arranged below cooling path C, and therefore below the containers 2 conveyed thereon.

As visible in Figures 2a to 2c, external wall 13 has at least one outlet opening 14 for feeding the cooling gas, i.e. for directing the cooling gas flow F, towards containers 2, more in particular towards the bottom portion 2a of the containers 2 being advanced by conveyor 12 along cooling path C.

As said above, external wall 13 extends longitudinally, relative to axis A.

Advantageously, outlet opening 14 comprises, in particular is defined by, a plurality of through holes 15 obtained in external wall 13 and longitudinally distributed onto external wall 13.

In detail, through holes 15 are arranged along axis A. More in detail, through holes 15 are distributed onto eternal wall 13 in respective longitudinal positions aligned with axis A.

In accordance with above, axis A is aligned with the relative part of cooling path C.

In this way, the cooling gas can be directed more effectively towards the bottom portion 2a of the containers 2 conveyed along cooling path C.

The above configuration is particularly advantageous relative to the case in which outlet opening 14 is defined by a single longitudinal slit; in fact the Applicant has observed that the fluid dynamics of the cooling gas are improved, thereby improving the cooling effect.

According to an aspect of the present invention, cooling device 11 comprises a thermoelectric module or Peltier module or Peltier cell 16.

A Peltier module is a known thermoelectric device capable of producing heat when supplied with electric current.

In detail, a typical Peltier module comprises semiconductors which are interposed and connected (in a known manner) between two opposing thermally conductive plates, namely a "cold" plate, or "cold side", and a "hot" plate, or "hot side".

In greater detail, when a voltage is applied to the free ends of the two semiconductors there is a flow of DC current across the junction of the semiconductors, causing a temperature difference. The cold side of the device absorbs heat which is then transported by the semiconductor to the other hot side of the device.

Hence, the Peltier module 16 comprises a cold side 16a (visible superiorly in Figure 2c) and a hot side 16b opposite to cold side 16a (and thus not visible).

Conveniently, the Peltier module 16 is arranged at the feeding duct 10.

In particular, the Peltier module 16 is arranged so that at least the cold side 16a is located internally of feeding duct 10.

Conveniently, the hot side 16b is located externally of feeding duct 10.

Advantageously, cooling device 6 further comprises a heat sink 17 arranged inside feeding duct 10, thermally connected to cold side 16b of thermoelectric module 16. The heat sink 17 defines a heat-exchange interface between thermoelectric module 16 and the cooling gas, i.e. the cooling gas flow F generated by flow generator F and directed to distribution duct 8 through feeding duct 10.

In other words, heat sink 17 is arranged within feeding duct 10 for exchanging heat with the generated cooling gas flow F, thereby cooling this latter.

Hence, the cooling gas reaches distributor duct 8 after being cooled by thermally interacting with heat sink 17. Then, the cooling gas outflows from distributor duct 8 through the through holes 15 and towards containers 2, cooling these latter.

Thanks to the presence of thermoelectric module 16 implemented according to the above configuration, the cooling effect becomes more controllable with respect to the known cooling systems, since the cooling effect is linked to the voltage supplied to the module. Hence, the cooling effect can be controlled in a simple manner by varying the voltage.

Therefore, flexibility of the cooling system 6, and of the apparatuses 50 and 1 is improved.

In addition, cooling system 6 according to the invention is much less mechanically complex than the one according to the prior art involving rotary joints.

Advantageously, cooling device 6 further comprises an auxiliary heat exchanger 18 thermally connected to the hot side 16b of Peltier module 16 for cooling such hot side 16b.

In particular, auxiliary heat exchanger 18 is conveniently arranged at feeding duct 10, in a position outside feeding duct 10 so as not to hinder the cooling effect of the Peltier module 16.

According to the preferred embodiment shown, auxiliary heat exchanger 18 comprises a tube 18a for receiving a cooling medium (for example cold water or Freon) and an exchange body 18b at which the tube 18a passes through for cooling the exchange body 18b, thereby cooling the hot side 16b of the Peltier module 16 during use.

According to an alternative embodiment not shown, auxiliary heat exchanger 18 is configured to cool hot side 16b by forced air recirculation.

In this way, the efficiency of the Peltier module 16 is further improved. In fact, the amount of heat transferred between cold side 16a and hot side 16b depends on the intensity of the applied current and, to obtain a good cooling effect on cold side 16a, the temperature of hot side 16b of the Peltier module 16 must not rise too much and therefore must be kept low.

In the embodiment shown, the feeding duct 10 is fluidly interposed between flow generator 7 and a lateral wall 19 of distribution duct 8, so that the generated cooling gas flow F is fed to distribution duct 8 transversally relative to longitudinal axis A.

In detail, axis A being curved, feeding duct 10 extends along a radial direction relative to the center of curvature of distribution duct 8, and conveniently in a position radially more internal than distribution duct 8 itself, with respect to the center of curvature.

More specifically, feeding duct 10 extends radially between distribution duct 8 and its center of curvature.

Thanks to the above configuration, a more compact cooling system 6 (and thus cooling apparatus 50) can be obtained, thereby simplifying the architecture of apparatuses 50 and 1, and saving space.

In an alternative embodiment not shown, feeding duct 10 is fluidly interposed between flow generator 7 and a longitudinal end of distribution duct 8, so that the generated cooling gas flow F is fed to distribution duct 8 in longitudinal direction.

The above configuration allows to improve the fluid behavior of the distribution duct 8, in particular minimizing or avoiding a Venturi effect at the through holes 15, which could compromise the nominal outputting of cooling gas from the same.

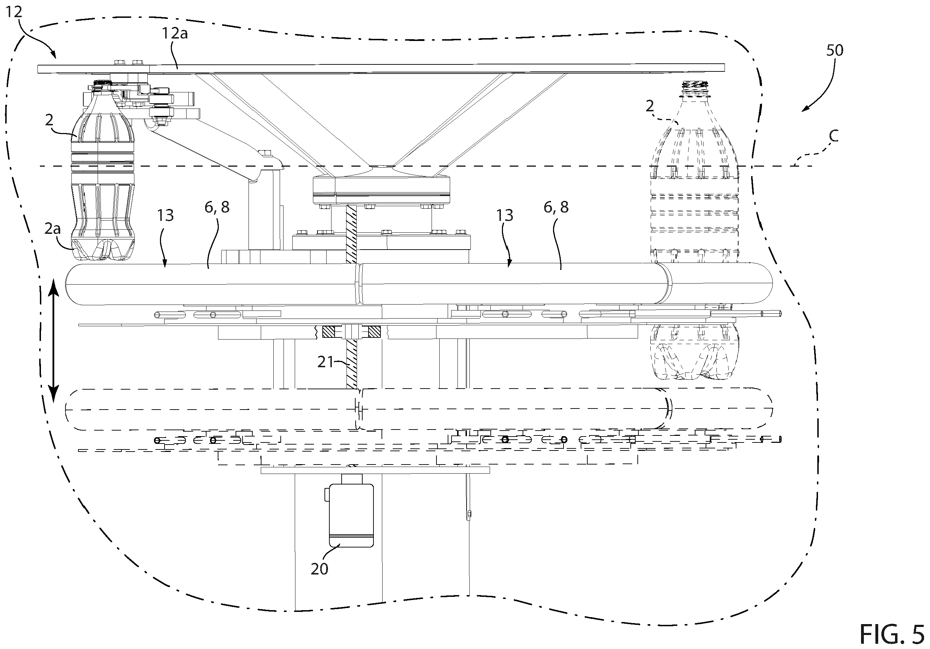

Referring now to Figure 5, cooling system 6 advantageously comprises an actuator 20 operatively coupled to distribution duct 8 for automatically regulating a distance of external wall 13 from the containers 2 to be cooled.

In detail, actuator 20 is configured to regulate a distance of external wall 13, and therefore of through holes 15, from cooling path C.

Preferably, actuator 20 is an electric motor, such as a stepper motor or a linear motor.

Preferably, actuator 20 is operatively coupled to an endless screw 21. The screw 21 is integrally coupled in turn to distribution duct 8, e.g. as shown in Figure 5. Accordingly, actuator 20 actuates endless screw 21, which causes the movement of distribution duct 8, thereby regulating the position of external wall 13 relative to cooling path C and/or relative to the conveyor 12.

In particular, the apparatus comprises an adjustment system. The adjustment system is configured for adjusting a distance between the external wall 13 and the conveyor 12. In the case the conveyor 12 comprises a star wheel 12a, the distance is a longitudinal distance. A longitudinal distance is a distance along the axis of the star wheel 12a. The adjustment system can comprise the actuator 20 and the screw 21.

Thanks to the above feature, cooling system 6 is highly and easily adaptable to different formats of containers 2 to be treated. Advantageously, the above configuration is much more simple than regulating the height of conveyor 12, i.e. of star wheels 12a, since in this case a further regulation of the conveyors of blower unit 3 and downstream unit 4, 5 would be needed.

As visible in Figure 1, cooling apparatus 50 advantageously comprises a plurality of cooling systems 6 and, therefore, a plurality of distribution ducts 8, each one having a longitudinal axis A.

Accordingly, each distribution duct 8 is positioned relative to conveyor 12 so that the respective longitudinal axis A extends along or follows geometrically part of the cooling path C.

More specifically, since in this preferred and non-limiting embodiment conveyor 12 comprises three successive star wheels 12a, cooling path C is curved about the axes of rotation of star wheels 12a.

Accordingly, each longitudinal axis A is arranged so as to follow a respective sector of cooling path C.

Hence, considering all distribution ducts 8 of cooling apparatus 50, distribution ducts 8 define, together, a unitary duct 80 extending substantially along the entire cooling path C.

In light of the above, it is clear that cooling apparatus 50 is of the modular type, each module being defined by one cooling system 6.

Advantageously, by changing the arrangement and/or the shape of each distribution duct 8, a cooling apparatus 50 which is modular, highly flexible and adaptable to cooling paths C of different shapes can be provided.

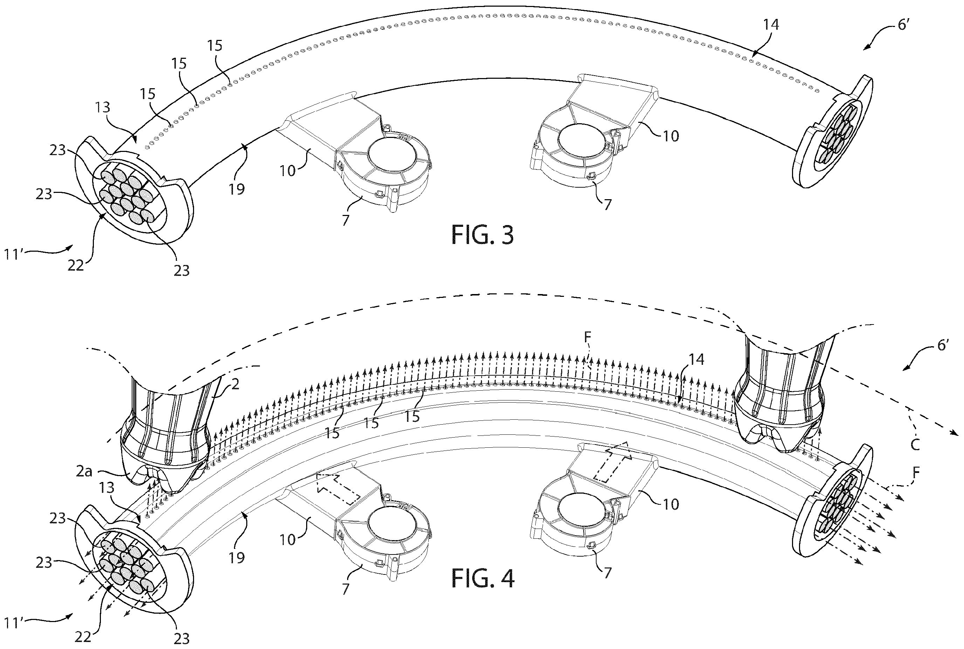

With reference to Figures 3 and 4, number 6' indicates a cooling system realized according to an alternative embodiment of the present invention.

Since cooling system 6' is similar, in structure and functioning, to the cooling system 6 described above, only the differences between the two will be described hereinafter, using the same reference numbers for similar or equal parts or components.

In particular, cooling system 6' differs from cooling system 6 by comprising a cooling device 11' which includes a bundle 22 of inner tubes 23 arranged within distribution duct 8, configured to circulate a cooling medium, such as cold water or Freon, and defining a heat-exchange interface between the cooling medium and the cooling gas which flows within distribution duct 8.

In use, cooling gas flow F generated by flow generator 7 travels through feeding duct 10 and enters distribution duct 8, where it exchanges heat with inner tubes 23, being thereby cooled before exiting from through holes 15.

According to an alternative embodiment not shown, bundle 22 is arranged within feeding duct 10.

Thanks to the above configuration, it is possible to obtain a cooling of containers 2 with a very low energy cost and with a simple architecture.

The advantages of cooling system 6, 6' according to the present invention will be clear from the foregoing description.

In particular, thanks to the presence of a Peltier module 16 according to the present invention, the cooling effect becomes more controllable with respect to the known cooling systems, since the cooling effect is linked to the voltage supplied to the module. Hence, the cooling effect can be controlled in a simple manner by varying the voltage.

Therefore, flexibility of the cooling system 6, and of the apparatuses 50 and 1 is improved.

In addition, in case a cooling system 6' is used, it is possible to obtain a cooling of containers 2 with a very low energy cost and with a simple architecture.

Clearly, changes may be made to cooling system 6, 6' as described herein without, however, departing from the scope of protection as defined in the accompanying claims.

## Claims

1. Cooling system (6, 6') for cooling containers (2) adapted to be filled with a pourable product, the cooling system (6, 6') comprising:
- a flow generator (7) for generating a cooling gas flow (F);
- a distribution duct (8) for receiving the generated cooling gas flow (F) and for directing the received cooling gas towards the containers (2);
- a feeding duct (10) fluidly interposed between the flow generator (7) and the distribution duct (8), for fluidly connecting them to one another, to feed the generated cooling gas flow (F) into the distribution duct (8); and
- a cooling device (11, 11') arranged downstream of the flow generator (7), the cooling device (11, 11') being configured for thermally interacting with the generated cooling gas flow (F), to cool the generated gas flow (F);
wherein the distribution duct (8) comprises an external wall (13) having at least one outlet opening (14) for directing the cooling gas towards the containers (2).

2. Cooling system as claimed in claim 1, wherein the distribution duct (8) has a longitudinal axis (A), the external wall (13) extending longitudinally; and wherein the outlet opening (14) comprises a plurality of through holes (15) longitudinally distributed onto said external wall (13).

3. Cooling system as claimed in claim 1 or 2, wherein the cooling device (11) comprises a thermoelectric module (16).

4. Cooling system as claimed in claim 3, wherein the thermoelectric module (16) is arranged at the feeding duct (10);
and wherein the cooling device (11) further comprises a heat sink (17) arranged inside the feeding duct (10), thermally connected to a cold side (16a) of the thermoelectric module (16) and defining a heat-exchange interface between the thermoelectric module (16) and the cooling gas.

5. Cooling device as claimed in claim 4, wherein the cooling device (11) further comprises an auxiliary heat exchanger (18), which is thermally connected to a hot side (16b) of the thermoelectric module (16), to cool such hot side (16b).

6. Cooling device as claimed in claim 5, wherein the auxiliary heat exchanger (18) comprises a tube (18a) for receiving a cooling medium and an exchange body (18b) at which the tube (18a) passes through for cooling the exchange body (18b), thereby cooling the hot side (16b) of the thermoelectric module (16).

7. Cooling system (6') as claimed in claim 1 or 2, wherein the cooling device (11') comprises a bundle (22) of inner tubes (23) arranged within the distribution duct (8) or within the feeding duct (10), configured to circulate a cooling medium and defining a heat-exchange interface between the cooling medium and the cooling gas.

8. Cooling system as claimed in any one of the foregoing claims, wherein the distribution (8) duct has a longitudinal axis (A);
and wherein the feeding duct (10) is fluidly interposed between the flow generator (7) and a lateral wall (19) of the distribution duct (8), so that the generated cooling gas flow (F) is fed to the distribution duct (8) transversally relative to the longitudinal axis (A).

9. Cooling system as claimed in any one of the claims 1 to 7, wherein the distribution duct (8) has a longitudinal axis (A);
and wherein the feeding duct (10) is fluidly interposed between the flow generator (7) and a longitudinal end of the distribution duct (8), so that the generated cooling gas flow (F) is fed to the distribution duct (8) in longitudinal direction.

10. Cooling apparatus (50) comprising:
- a cooling system (6, 6') as claimed in any one of the foregoing claims; and
- a conveyor (12) for advancing the containers (2) along a cooling path (C).

11. Cooling apparatus (50) according to Claim 10, wherein the conveyor (12) comprises a star wheel (12a), the apparatus comprising an adjustment system which is configured for adjusting a distance between the external wall (13) and the conveyor (12), the distance being along the axis of the star wheel (12a).

12. Cooling apparatus as claimed in claim 10 or 11, wherein the distribution duct (8) has a longitudinal axis (A);
and wherein the distribution duct (8) is positioned relative to the conveyor (12) so that the longitudinal axis (A) extends along or follows geometrically at least part of said cooling path (C).

13. Cooling apparatus as claimed in claim 12, wherein the cooling system (6, 6') is configured for cooling a bottom portion (2a) of the containers (2);
and wherein the distribution duct (8) is positioned relative to the conveyor (12) so that said external wall (13) faces the cooling path (C), to face the bottom portion (2a) of the containers (2) to be cooled.

14. Cooling apparatus as claimed in any of claims 11 to 13, and comprising a plurality of said cooling systems (6, 6');
wherein each distribution duct (8) has a longitudinal axis (A);
wherein each distribution duct (8) is positioned relative to the respective conveyor (12) so that the respective longitudinal axis (A) extends along or follows geometrically a respective part of the cooling path (C);
and wherein the distribution ducts (8) define together a unitary duct (80) extending along the entire cooling path (C).

15. Apparatus (1) for packaging a pourable product comprising:
- a blower unit (3) for forming a plurality of containers (2) starting from preforms made of plastic material; and
- a filling unit (4) for filling the containers (2) with a pourable product; and
- a labelling unit (5) for labelling the containers (2); and/or
- a capping unit for capping the filled container (2) ;
wherein the apparatus (1) comprises:
- a cooling system (6, 6') as claimed in any one of claims 1 to 13 and operatively interposed between the blower unit (3) and one of the filling unit (4) and the labelling unit (5), for cooling the containers (2) upstream of said one of the filling unit (4) and the labelling unit (5); or
- a cooling apparatus (50) as claimed in claim 14 and operatively interposed between the blower unit (3) and one of the filling unit (4) and the labelling unit (5), for cooling the containers (2) upstream of said one of the filling unit (4) and the labelling unit (5).
